# EUROPÄISCHE PATENTANMELDUNG

(11) **EP 2 781 701 A1**
(43) Veröffentlichungstag der Anmeldung: **24.09.2014**
(21) Anmeldenummer: 13159674.4
(22) Anmeldetag: 18.03.2013
(51) Int. Cl.: F01K 13/02, F22B 1/00

(54) **Verfahren zum Betreiben eines solarthermischen Kraftwerks**

(71) Anmelder: Siemens Aktiengesellschaft, 80333 München (DE)
(72) Erfinder: Brückner, Jan, 91080 Uttenreuth (DE); Thomas, Frank, 91056 Erlangen (DE)

(57) **Zusammenfassung**

Die Erfindung betrifft ein Verfahren zum Betreiben eines solarthermischen Kraftwerks mit einem Dampferzeuger (B) dem ein solarthermisch erhitztes Wärmeträgermedium (M) zugeführt wird, wobei das Wärmeträgermedium (M) über eine Umleitung (U) zumindest teilweise am Dampferzeuger (B) vorbeigeführt wird, wenn ein den Dampferzeuger durchströmendes Strömungsmedium einen bestimmten Druckwert überschreitet

## Beschreibung

Die Erfindung betrifft ein Verfahren zum Betreiben eines solarthermischen Kraftwerks gemäß dem Oberbegriff des Anspruchs 1, sowie ein entsprechend ausgebildetes solarthermisches Kraftwerk.

Solarthermische Kraftwerke stellen eine Alternative zur herkömmlichen Stromerzeugung dar. Ein bereits bekanntes Kraftwerkskonzept in diesem Bereich ist das sogenannte Parabolrinnenkraftwerk, wie zum Beispiel in der DE 10 2009 038 446 A1 offenbart. In diesem Kraftwerkstyp wird üblicherweise Thermoöl als Wärmeträgermedium verwendet, welches die Parabolrinnen durchströmt und so die über die Sonne eingebrachte Wärme aufnimmt. Die vom Thermoöl aufgenommene Wärme wird dann einem Dampferzeuger zugeführt. Dort werden die mit einem Strömungsmedium (Wasser-Dampf) gefüllten Dampferzeugerrohre von dem erhitzten Thermoöl umströmt, welches seine Wärme an die kälteren Dampferzeugerrohre abgibt. Der in den Rohren erzeugte Dampf treibt dann eine Dampfturbine an.

Zur Erzielung eines möglichst hohen Anlagenwirkungsgrades kann parallel und physisch getrennt vom Dampferzeuger ein Zwischenüberhitzer vorgesehen werden. Dazu wird der abgekühlte Abdampf der Hochdruck-Turbinenstufe dem Zwischenüberhitzer als weiterer Wärmeübertrager zugeführt und abermals auf ein hohes Temperaturniveau gebracht. Im Gegensatz zum eingangs beschriebenen Dampferzeuger werden hier typischerweise die mit Thermoöl gefüllten Zwischenüberhitzerrohre so vom Abdampf umströmt, so dass dieser wieder aufgeheizt wird. Aufgrund der verhältnismäßig großen Volumenströme des Zwischenüberhitzerdampfes halten sich bei einem derartigen Design auch die dampfseitigen Druckverluste in akzeptablen Grenzen. Üblicherweise wird dabei die Zufuhr an Thermoöl als freier Parameter geregelt, um so bei gegebenem Zwischenüberhitzerdampfmassenstrom die gewünschte Dampfendtemperatur für die Mitteldruckstufen der Dampfturbine zu erzielen. Der verbleibende Rest des im Solarfeld erhitzten Wärmeträgermediums steht dann dem Dampferzeuger zur Dampfproduktion zur Verfügung. Somit ist die vom Dampferzeuger produzierte Dampfmenge unmittelbar ein Resultat der dem Dampferzeuger zugeführten Menge an Thermoöl. Dies hat gerade beim Anfahren des solarthermischen Kraftwerks, bei dem das Thermoöl schnell erhitzt wird, zur Konsequenz, dass es am Hochdruckteil der Dampfturbine zu einer rapiden Druckerhöhung kommen kann. Eine solche Druckentwicklung bei einer überproportional schnell ansteigenden Dampfproduktion kann das Anfahren der Dampfturbine erschweren bis gar unmöglich werden lassen. In der Regel fordert die Dampfturbine auch beim Anfahren Frischdampftemperaturen, die sich in einem zulässigen Temperaturbereich bewegen. So ist die Frischdampftemperatur während des Anstoßens, Beschleunigens und je nach Turbinentyp noch während der ersten Belastungsphase weitgehend konstant zu halten. Darüber hinaus ist zusätzlich beim Anfahren der Dampfturbine eine Mindestüberhitzung des Frischdampfs sicherzustellen, die nicht wesentlich unterschritten werden darf. Nur so kann sichergestellt werden, dass keine für die Dampfturbine unzulässigen Betriebszustände, wie beispielsweise unzulässige Tröpfchenbildung in den Schaufelreihen auftreten.

Die Überhitzung des Frischdampfs ist allerdings grundsätzlich eine Funktion der beiden thermodynamischen Zustandsgrößen Druck und Temperatur. Muss die Frischdampftemperatur beim Anfahren der Dampfturbine bestimmte Kriterien erfüllen (z.B. konstant bleiben)während der Druck aufgrund der stetig steigenden Beheizung durch die stetig steigende Menge und/oder Temperatur des Thermoöls aus dem Solarfeld weiter ansteigt, so kann eine Mindestüberhitzung nicht mehr aufrecht erhalten werden. Konkret bedeutet dies, dass die Dampfturbine im günstigsten Fall nur unter erhöhter Bauteilbelastung und im ungünstigsten Fall gar nicht, angefahren werden kann bzw. darf.

Eine heute gängige Möglichkeit, die zuvor beschrieben Problematik zu umgehen, ist eine auf diesen Anforderungsfall zugeschnittene Auslegung einer Hochdruckumleitung an der Dampfturbine. Wird die Hochdruckumleitung im Vergleich zu den Standardbetriebsdaten mit einem größeren Strömungsquerschnitt ausgelegt, so kann beim Anfahren durch diese Auslegungsreserve ein unzulässig hoher Druckanstieg vermieden werden. Die größere Dimensionierung der Hochdruckumleitung führt allerdings zu steigenden Kosten für das Umleitsystem. Zusätzlich erhöhen sich auf diesem Weg die abzuführenden Dampfmassenströme über die Hochdruckumleitung, die mit daraus resultierenden steigenden Wärmeverlusten behaftet sind.

Aufgabe der Erfindung ist es, ein Verfahren bereitzustellen, das die zuvor beschriebenen Nachteile überwindet.

Diese Aufgabe wird mit dem Verfahren mit den Merkmalen des Anspruchs 1 gelöst.

Dadurch, dass ein solarthermisch erhitztes Wärmeträgermedium dem Dampferzeuger zugeführt wird und das Wärmeträgermedium über eine Umleitung zumindest teilweise am Dampferzeuger vorbeigeführt wird, wenn das Strömungsmedium und insbesondere der Frischdampf im Dampferzeuger einen bestimmten Druckwert überschreitet, kann unter Einhaltung aller erforderlichen Anfahrkriterien der Dampfturbine eine Hochdruckumleitung der Dampfturbine weiterhin ausschließlich nach Standardkriterien ausgelegt werden. Je nach Auslegung der Umleitung (Bypass) und der Regelgüte sämtlicher erforderlichen Regelstrukturen ist es prinzipiell sogar denkbar die Hochdruckumleitung mit einem kleineren Querschnitt auszulegen, so dass Investitionskosten eingespart werden können. Darüber hinaus kann im geregelten Umleitbetrieb des Wärmeträgermediums am Dampferzeuger vorbei, die über die Hochdruckumleitung abströmende Dampfmenge, die in der Regel im Kondensator landet, deutlich reduziert werden, wodurch sich die damit verbundenen Wärmeverluste ebenfalls signifikant reduzieren lassen. In Betriebsphasen der Dampfturbine in denen die Hochdruckumleitung geschlossen ist, kann die Thermoöl-Bypassmenge wieder reduziert werden und so die dem Dampferzeuger zugeführte Thermoölmenge und damit dessen Dampfproduktion, maximiert werden. Der im Dampferzeuger erzeugte Frischampf kann so in einem von der Dampfturbine angetriebenen Generator verstromt werden und muss nicht über die Hochdruckumleitung verworfen werden.

Da aufgrund der großen Thermoölmengen, der großen Volumina und damit großen Metallmassen das Solarfeld selbst eine starke thermische Trägheit mit entsprechend verzögertem Ansprechen auf Temperaturänderungen aufweist, kann die während des Umleitbetriebs mit reduziertem Hochdruckumleitungs-Querschnitt eingesparte Wärme letztendlich dazu genutzt werden, das Solarfeld mit all seinen Komponenten schneller auf Betriebstemperatur zu bringen und so den Anfahrvorgang des Solarfelds zu beschleunigen. Sobald das Solarfeld seine Volllastperformance erreicht, sollte mittlerweile auch die Hochdruckumleitung geschlossen sein, und der erzeugte Frischdampf ausschließlich zur Stromproduktion zur Verfügung stehen. Somit werden auch Wärme und ggf. Wasserverluste im solarthermischen Kraftwerk effektiv reduziert. Das Verfahren ist damit prinzipiell in jedem Betriebszustand, insbesondere aber während des Anfahrens anwendbar, um so zu jedem Zeitpunkt eine Mindestüberhitzung für die Dampfturbine zu gewährleisten.

Vorzugsweise Weiterbildungen sind den Unteransprüchen zu entnehmen.

Die Erfindung soll nun anhand einer Figur beispielhaft erläutert werden. Dargestellt sind hier Teile des solarthermischen Kraftwerks, nämlich ein Solarfeld S, ein Dampferzeuger B, ein Zwischenüberhitzer Z, eine Hochdruckstufe HD und eine Mitteldruckstufe MD einer Dampfturbine, sowie eine Hochdruckumleitung HDU. Das Wärmeträgermedium M, hier Thermoöl, wird in Parabolrinnen des Solarfeldes S erhitzt und anschließend sowohl dem Dampferzeuger B als auch dem Zwischenüberhitzer Z zugeführt. Das in den Dampferzeuger B eingespeiste Speisewasser W wird mit Hilfe des erhitzten Thermoöls erwärmt und in Frischdampf D überführt, welcher dann der Hochdruckstufe HD der Dampfturbine zugeführt wird. Parallel dazu wird im Zwischenüberhitzer Z kalter Zwischenüberhitzerdampf KZU aus der Hochdruckstufe HD nochmals erhitzt und als heißer Zwischenüberhitzerdampf HZU der Mitteldruckstufe MD der Dampfturbine wieder zugeführt. Zudem ist im vorliegend gezeigten Ausführungsbeispiel eine Hochdruckumleitung HDU vorgesehen.

Um die Druckzunahme auch bei üblicher HDU Auslegung ohne Vergrößerung des Strömungsquerschnitts auf zulässige Werte zu begrenzen, ist die Bespeisung des Dampferzeugers mit Thermoöl zu gegebenem Zeitpunkt geeignet vorzugeben, d.h. zu limitieren. Da unter diesen Umständen aber nicht die gesamte zugeführte Thermoölmenge durch den Zwischenüberhitzer Z und den Dampferzeuger B aufgenommen werden kann, ist der entsprechende Rest über ein Bypass System um den Dampferzeuger B und den Zwischenüberhitzer Z herumzuführen. Üblicherweise liegt in heutigen Anlagenkonzepten eine derartige Umleitung U, bestehend aus einer Bypass Armatur - hier ein regelbares Ventil RU - und entsprechend anbindenden Rohrleitungen bereits vor, da beim unmittelbaren Anfahren die aus dem Solarfeld gelieferte Menge an Wärmeträgermedium M, je nach Temperatur, noch nicht direkt in den Dampferzeuger B bzw. Zwischenüberhitzer Z eingebracht werden darf. Die Idee der Erfindung besteht nun darin, dieses Bypass System auch zur Begrenzung einer unzulässig schnellen Druckzunahme des Strömungsmediums, hier des Frischdampfs (D), im Hochdruck-System zu verwenden. Hierfür wird der dem Dampferzeuger zugeführte Thermoölmassenstrom anhand der Druckentwicklung des Frischdampfs (D) geeignet begrenzt und der verbleibende Rest an Thermoöl über die Umleitung U um den Dampferzeuger B und den Zwischenüberhitzer Z herumgeführt.

Neben der Regelfähigkeit der Bypass-Armatur RU und der gegebenenfalls vorhandenen Regelarmaturen RB und RZ (die als regelbare Ventile ausgebildet sein können, ist auch ein geeignetes Regelkonzept zum Ansteuern dieser Armaturen vorzusehen. Dies kann beispielsweise eine geeignete Druckregelung sein, die darauf achtet, dass der Druck im Thermoölkreislauf des Dampferzeugers nicht unzulässig hoch ansteigt, was passieren könnte, wenn nicht der gesamte Thermoölstrom von Zwischenüberhitzer und Dampferzeuger übernommen werden würde.

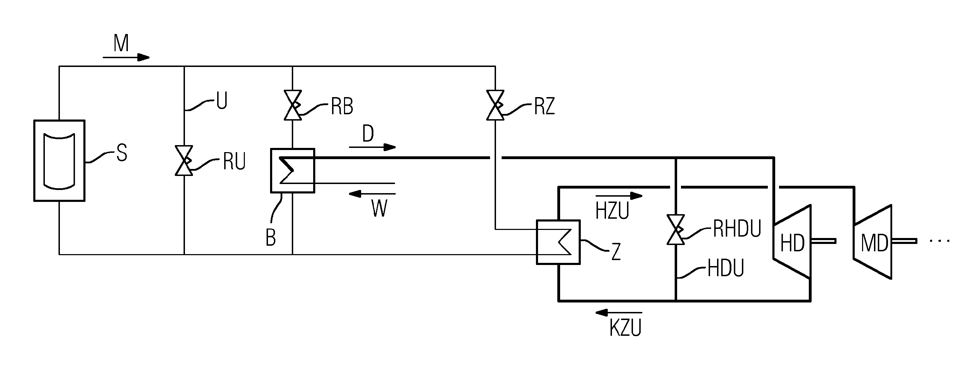

## Patentansprüche

1. Verfahren zum Betreiben eines solarthermischen Kraftwerks mit einem Dampferzeuger (B) dem ein solarthermisch erhitztes Wärmeträgermedium (M) zugeführt wird
**dadurch gekennzeichnet, dass** das Wärmeträgermedium (M) über eine Umleitung (U) zumindest teilweise am Dampferzeuger (B) vorbeigeführt wird, wenn ein den Dampferzeuger durchströmendes Strömungsmedium einen bestimmten Druckwert überschreitet.

2. Verfahren nach Anspruch 1,
**dadurch gekennzeichnet, dass** das Wärmeträgermedium (M) über eine Umleitung (U) zumindest teilweise am Dampferzeuger (B) vorbeigeführt wird, wenn ein Frischdampfanteil (D)des Strömungsmediums am Austritt des Dampferzeugers (B) oder am Eintritt der Dampfturbine (HD) einen bestimmten Druckwert überschreitet.

3. Verfahren nach Anspruch 1 oder 2,
**dadurch gekennzeichnet, dass** ein in der Umleitung (U) angeordnetes regelbares Ventil (RU) zumindest teilweise geöffnet wird, wenn der Druckwert überschritten wird.

4. Verfahren nach einem der Ansprüche 1 bis 3, **dadurch gekennzeichnet, dass** die dem Dampferzeuger (B) zugeführte Menge an Wärmeträgermedium (M) zumindest teilweise reduziert wird, wenn der Druckwert überschritten wird.

5. Verfahren nach einem der Ansprüche 1 bis 4, **dadurch gekennzeichnet, dass** während des Anfahrens des Dampferzeugers (B) zudem einem Zwischenüberhitzer (Z) Wärmeträgermedium geregelt zugeführt wird, wenn die Temperatur des Wärmeträgermediums (M) die mittlere Materialtemperatur des Zwischenüberhitzers (Z) überschreitet.

6. Solarthermisches Kraftwerk mit einem Solarfeld (S) zum Erhitzen eines Wärmeträgermediums (M), einem Dampferzeuger (B) dem das erhitzte Wärmeträgermedium (M) zugeführt und so dem Dampferzeuger (B) zugeführtes Speisewasser (W) verdampft wird, und einer Dampfturbine (HD,MD) der dieser Dampf (D) zugeführt wird,
**dadurch gekennzeichnet, dass** eine Regeleinrichtung vorgesehen ist, die regelbare Ventile in einer Umleitung (U) und/oder einer Zuführung zum Dampferzeuger (B) und/oder einer Zuführung zu einem Zwischenüberhitzer (Z) so steuert, dass das Wärmeträgermedium (M) über die Umleitung (U) am Dampferzeuger (B) zumindest teilweise vorbeigeführt wird, wenn ein den Dampferzeuger durchströmendes Strömungsmedium einen bestimmten Druckwert überschreitet.

7. Solarthermisches Kraftwerk nach Anspruch 6
**dadurch gekennzeichnet, dass**
- das Solarfeld (S) Parabolrinnen aufweist, welche von Thermoöl als Wärmeträgermedium (M) durchströmt werden,
- der vom erhitzten Thermoöl durchströmte Dampferzeuger (B) ein Zwangsdurchlaufverdampfer ist,
- ein vom Thermoöl durchströmter Zwischenüberhitzer (Z) physisch getrennt vom Dampferzeuger (B) angeordnet ist, und
- für eine Hochdruckstufe (HD) der Dampfturbine eine Hochdruckumleitung (HDU) vorgesehen ist.
